# EUROPEAN PATENT APPLICATION

(11) **EP 2 023 574 A1**
(43) Date of publication of application: **11.02.2009**
(21) Application number: 07015524.7
(22) Date of filing: 07.08.2007
(51) Int. Cl.: H04L 29/08

(54) **An improved telecommunication network**

(71) Applicant: Nokia Siemens Networks Oy, 02610 Espoo (FI)
(72) Inventor: Dhruva, Aditya, Malleswaram 560 003 Bangalore (IN)
(74) Representative: Bruglachner, Thomas E.

(57) **Abstract**

A method of managing a subscriber presence of a telecommunication network comprises the step of registering with the telecommunication network by the subscriber. The telecommunication network produces a feed of the subscriber presence whilst a feed reader reads the feed.

## Description

This invention relates to an improved telecommunication network.

Wireless communication systems provide the ability for users to communicate with other users in a wireless mode. They usually include a circuit-switched system and a packet-switched system.

In a typical circuit-switched wireless communication system, a mobile switching centre connects the landline public-switched telephone network system to the wireless communication system. The mobile switching centre is usually split into a mobile switching centre server and a media gateway.

An approach to introducing Internet protocol services for telecommunication networks is via an Internet Protocol Multimedia Subsystem as disclosed in "3rd Generation Partnership Project (3GPP)", http://www.3gpp.org/. The Internet Protocol Multimedia Subsystem generally includes a set of Internet protocol connected network entities, which is within the Internet Protocol Multimedia Subsystem using packet-switched services. These network entities provide Internet protocol multimedia features and services using session initiation protocol (SIP) as the primary vehicle for call control. The Internet Protocol Multimedia Subsystem is different from the traditional mobile switching centre supporting circuit-switched services.

US 2007/0043759 A1 discloses a method for data management and data rendering for disparate data types.

US 2007/0088832 A1 discloses a method for a centrally managed subscription for feeds accessible at different locations on a network.

It is an object to provide an improved Internet Protocol Multimedia Subsystem (IMS). This object is achieved by the subject matter of the independent claim. Further improvements are achieved by the subject matter of the dependent claims.

A method of managing subscriber presence of a telecommunication network comprises the step of registering with the telecommunication network by the subscriber. The telecommunication network produces a feed of the subscriber presence. A feed reader reads the feed.

A telecommunication-network subscriber repository may produce the feed of the subscriber presence. The telecommunication network can be in the form of an Internet Protocol multimedia subsystem (IMS) network. The telecommunication-network subscriber repository may be in the form of a Home Subscriber Server. The feed can be in a Really Simple Syndication format. An application may produce a service that is based on the feed. The service may be in the form of a time-based billing of subscribers.

The method provides an easy and simple way of managing subscriber presence, without having the need for complex protocols. The method also allows Internet-based application to be provided to subscribers 11 in a simple manner.

A system of telecommunication comprises a telecommunication network, and a feed reader. The telecommunication network produces a feed of the subscriber presence. The feed reader is for polling and reading the feed.

The telecommunication network may comprise a subscriber repository. The telecommunication network can be in the form of an IMS network whilst the subscriber repository can be in the form of a Home Subscriber Server. The feed may also conform to a Really Simple Syndication format. The IMS network may provide a service that is based on the feed.

The system is simple and is usually implemented with minimal costs.
FIG. 1 illustrates an example of an IMS;
FIG. 2 illustrates a sample RSS (Really Simple Syndication) XML (Extensible Markup Language) file of the IMS of FIG. 1; and
FIG. 3 illustrates a message flow chart of the IMS of FIG. 1.

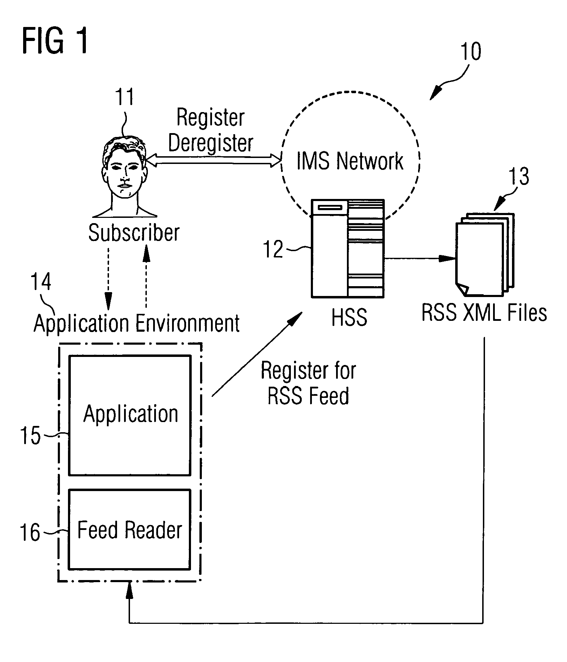

FIG. 1 illustrates an example of an IMS or IMS network 10 with a plurality of subscribers 11. A description of the IMS network 10 is disclosed in "3rd Generation Partnership Project (3GPP)", http://www.3gpp.org/.

The IMS network 10 comprises a HSS (Home Subscriber Server) 12, a plurality of RSS (Really Simple Syndication) XML (Extensible Markup Language) files 13, and an application environment 14. The application environment 14 includes an application 15 and a feed reader 16.

The subscriber 11 registers or deregisters his presence with the HSS 12 via the IMS network 10. The subscriber 11 provides an input to the application environment 14 and he receives an output from the application environment 14. The input from the subscriber 11 may be in the form of a subscriber registration whilst the output from the application environment 14 may be in the form of a service.

The HSS 12 receives a registration for a RSS feed or RSS XML file 13 from the application environment 14 and it produces the plurality RSS XML files 13, which are fed to the feed reader 16 of the application environment 14.

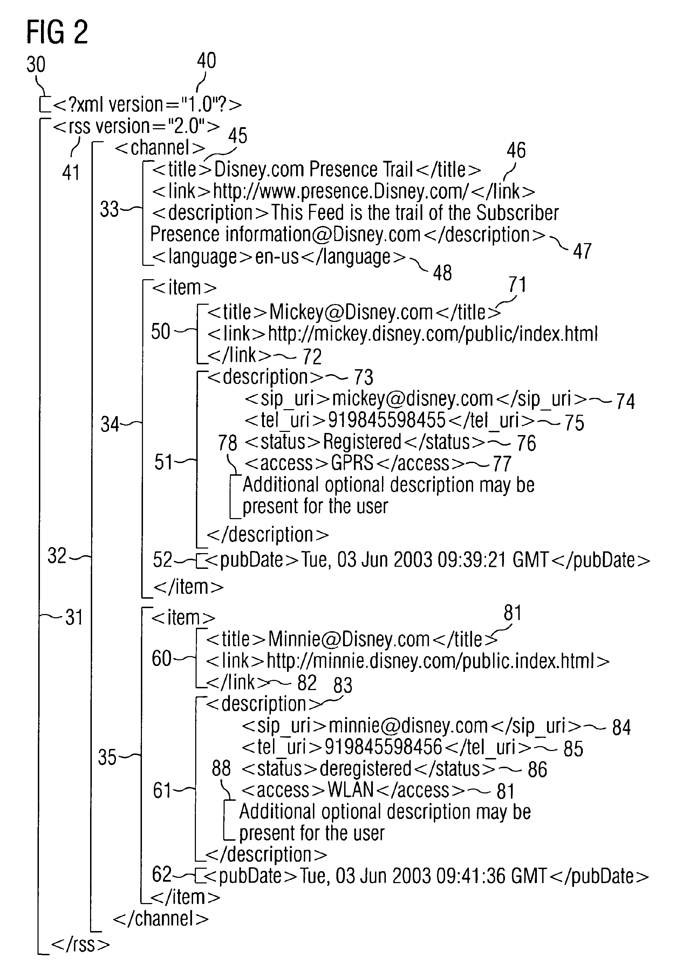

FIG. 2 illustrates a sample RSS XML file 13 of the IMS network 10 of FIG. 1. Format of the RSS XML file 13 conforms to RSS 2.0 specification, which conforms to XML 1.0 specification. A description of the RSS 2.0 specification is disclosed in http://www.rssboard.org/rss-specification#whatIsRss whilst a description of the XML 1.0 specification is disclosed in http://www.w3.org/TR/xml.

The RSS XML file 13 includes an XML header 30 and a RSS segment 31 that comprises a channel segment 32. The channel segment 32 includes a channel header 33 and a plurality of item segments 34 and 35.

The XML header 30 includes an XML element 40 whilst the RSS segment includes a RSS element 41. The channel header segment 33 comprises a channel title element 45, a channel link element 46, a channel description element 47, and a channel language element 48.

The item segment 34 comprises an item header 50, an item description segment 51, and an item-publication date segment 52. The item header 50 comprises an item title element 71, and an item link element 72. The item description segment 51 comprises a SIP (session in progress) item description element 74, a telephone item description element 75, a status item description element 76, an access item description element 77, and a description 78.

Similarly, item segment 35 comprises an item header 60, an item description segment 61, and an item-publication date segment 62. The item header 60 comprises an item title element 81, and an item link element 82. The item description segment 61 comprises an SIP item description element 84, a telephone-item description element 85, a status-item description element 86, an access-item description element 87, and a description 88.

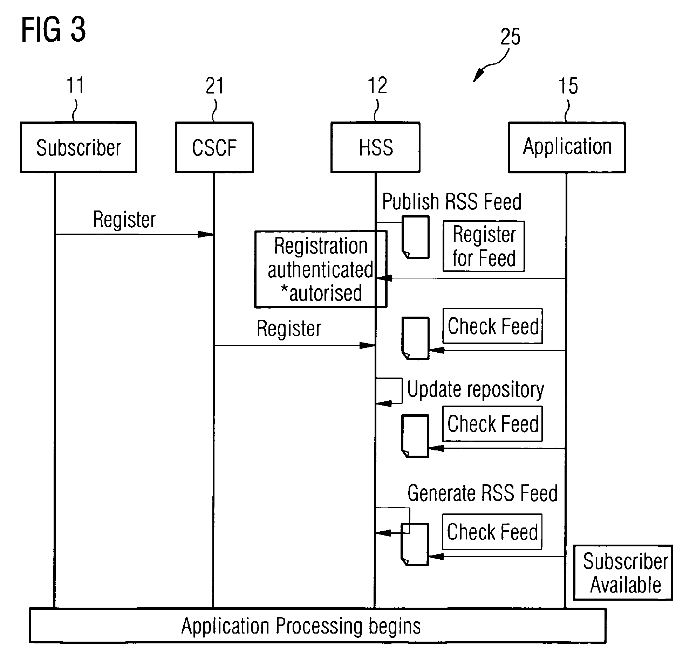

FIG. 3 illustrates a message flow chart 25 of the IMS network 10 of FIG. 1. The message flow chart 26 comprises the subscriber 1, a CSCF (Call State Control Function) 21, the HSS 21, and the application 15.

The subscriber 11 registers his presence with the CSCF 21. The CSCF 21, in turn, registers the subscriber presence with the HSS 12. The HSS 12 updates its repository of the subscriber presence and generates an updated RSS XML file 13 of the subscriber presence. The application 15 registers for the RSS XML file 13 with the HSS 12. The access of the RSS XML file 13 may be authenticated and authorized by the HSS 12.
The application 15 also checks for any updated RSS XML file 13.

In a generic sense, the IMS network 10 is a form of a telecommunication network, which provides means of communication for its user.

The feed 13 includes a collection of data, which is provided by the telecommunication network. The feed 13 may in the format of the RSS XML file 13. The format of the feed may conform to other versions of RSS, instead of RSS 2.0. The format of the feed may also conform to other specifications such as Rich Site Summary 0.91, RDF Site Summary 1.0 or Atom 1.0, instead of Really Simple Syndication.

A description of specification of Rich Site Summary 0.91 is shown in http://www.rssboard.org/rss-0-9-1-netscape. A description of specification of RDF Site Summary 1.0 is shown in G Beged-Dov et al, "RDF Site Summary (RSS) 1.0", http://web.resource.org/rss/1.0/spec. A description of Atom 1.0 is disclosed in M. Nottingham and R. Sayre, "The Atom Syndication Format", RFC 4287, December 2005, http://www.ietf.org/rfc/rfc4287.txt.

The RSS XML file 13 may comprise an item description segment that provides further information pertaining to the subscriber 11. In practise, the RSS XML file 13 may include other elements besides the elements described above.

The feed reader 16 is a form of an application or tool that reads or extracts the feed 13. The HSS 12 is a form of a telecommunication-network subscriber repository. The telecommunication-network subscriber repository may host a collection of data or information about the subscriber 11.

The IMS network 10, as provided here, provides means of communication for its subscribers 11. The subscriber 11, as provided here, denotes a user of the IMS network 10 such as mobile phone services. The subscriber 11 may register his presence with the IMS network 10 or deregister his presence from the IMS network 10. The subscriber 11 may also provide an input in the form of a registration with the application 15. The CSCF 21, as provided here, is a first contact point of the IMS network 10 for the subscriber 11. The CSCF 21 acts to transfer information of the presence of the subscriber 11 to the HSS 21. The CSCF 21 may also transfer other appropriate information of the subscriber 11 such as location of the subscriber 11 to the HSS 21.

The HSS 12, as provided here, maintains a database of the subscribers 11. The HSS 12 receives the information of the presence of the subscriber 11 and other appropriate information. The HSS 12 generates a feed or report of the presence of the subscriber 11 and updates the feed of the subscriber presence. The report may include information of the subscriber such as the subscriber's location. The report, as provided here, is in the form of the RSS XML file 13. The feed reader 16, as provided here, polls the HSS 21 for an RSS XML file 13 as well as updates of the RSS XML file 13. The feed reader 16 extracts data from the RSS XML file 13 and provides the data of the RSS XML file 13 to the application 15. The application 15, as provided here, receives the data of the RSS XML file 13 from the feed reader 16 and may provide services to the subscriber 11 as are based on the presence of the subscriber 11.

The XML element 40, as provided here, identifies the version of the XML specification that the RSS XML file 13 is conforming to. The RSS element 41, as provided here, identifies the version of the RSS specification that the RSS segment is conforming to.

The channel title element 45, as provided here, provides a title or name for the channel segment 32. The channel link element 46, as provided here, provides an URL (Uniform Resource Locator or Universal Resource Locator) of the channel segment 32. The channel description element 47, as provided here, provides a description of the channel segment 32. The channel language element 48, as provided here, identifies the language that the information within the channel segment 32 is written in.

The item title element 71 or 81, as provided here, provides a title or name for the item segment 34 or 35. The item link element 72 or 82, as provided here, provides an URL of the item segment 34 or 35.

The SIP item description element 74 or 84, as provided here, provides contact information of the subscriber 11. The telephone-item description element 75 or 85, as provided here, provides a telephone number of the subscriber 11. The status-item description element 76 or 86, as provided here, provides registration status of the subscriber 11. The access-item description element 77 or 86, as provided here, provides access mode of the subscriber 11. The description 78 or 88, as provided here, provides additional and relevant information of the subscriber 11 to the application 15.

A method of managing subscriber presence comprises the step of registering or deregistering with the IMS network 10 by the subscriber 11. The subscriber 11 may register his presence or deregister his presence by means of as for example mobile phones, personal digital assistant (PDA) or fixed telephone access line.

The CSCF 21 receives the registration of subscriber presence and it transmits the registration of the subscriber presence to the HSS 12. The HSS 12 receives registration of subscriber presence and it generates or updates a report of the subscriber presence that is in the form of RSS XML files 13. The reports may be updated on a periodic basis or updated when pre-determined setting within the HSS 12 that are set by the application 15 are met. As an example, the application 15 may trigger update of reports when a certain group of subscribers is present.

The application 15 subscribes for the RSS XML files 13 via the HSS 12. The HSS 12 may authenticate and authorize access to the RSS XML file 13. The access may be authorized by means of a white list or a blacklist. The white list includes a list of applications 15 that are permitted to access the RSS XML file 13 whilst the blacklist includes a list of applications 15 that are barred from accessing the RSS XML file 13. The access to the RSS XML file 13 may be authenticated by use of digital certificate or digital signature.

In a special example, the access to a specific content of the RSS XML file 13 may be restricted.

The subscriber 11 may register with the application environment 14 and may provide subscriber information, such as subscriber's stock portfolio, to the application 15. The feed reader 16 polled the HSS 12 for an updated RSS XML file 13 and it transmits the updated RSS XML file 13 to the application 15.

The application 15 receives the updated RSS XML file 13 via the feed reader 16 and it acts to provide appropriate services based on the updated RSS XML file 13. The RSS XML file 13 provides the registration status of the subscriber 11 and the corresponding information such as access mode that are enclosed within the elements of the RSS XML file 13. The RSS XML file 13 may provide additional information via the item description elements 76 and 86.

The SIP item description element 74 or 84, as provided here, provides contact information of the subscriber 11. The telephone-item description element 75 or 85, as provided here, provides a telephone number of the subscriber 11. The status-item description element 76 or 86, as provided here, provides the registration status of the subscriber 11. The access-item description element 77 or 86, as provided here, provides the access mode of the subscriber 11. The description 78 or 88, as provided here, provides additional and relevant information about the subscriber 11 to the application 15.

As an further example, the RSS XML file 13 may provide to the application 15 an email address of the subscriber 11 via the SIP item description element 74. The phone-item description element may provide a mobile phone number of the subscriber 11. The status-item description element 76 may provide a current registration status of the subscriber 11. The access-item description element 77 may provide a current access mode, which is via mobile phone, of the subscriber 11. The description 78 may provide stock portfolio of the subscriber 11. The application 15 analyses the information provided by the RSS XML file 13, and it provides current stock prices of the subscriber's stock portfolio to the subscriber's mobile device.

The subscriber presence may also trigger location-based type of services such as provision of locations of restaurant that are within the vicinity of the subscriber 11. The duration of the subscriber presence may be also be tracked and it can be utilized for time-based type of billing. Alternatively, the subscriber presence may be used for Internet-push type of services such as news, stock prices, or instant messages. The subscriber presence can also be used to form a buddy-list for Internet-based social communities.

In practise, system managers of the IMS network 10 may tailor the volume or size of the RSS XML file 13 based on scalability, performance or availability of the IMS network 10. A RSS XML file 13 may be generated for a HSS 12 rather than for a plurality of HSS 12, or for an Internet domain. The RSS XML file 13 may also be generated for a specific group of subscribers 11, or for individual subscriber 11. The RSS XML file 13 can also be employed for file virtualization or aliasing to enhance system security.

### Reference numbers

- 10: IMS network
- 11: subscriber
- 12: HSS
- 13: RSS XML file
- 14: application environment
- 15: application
- 16: feed reader
- 20: description element
- 21: CSCF
- 25: message flow chart
- 30: XML header
- 31: RSS segment
- 31: a channel segment
- 33: a channel header
- 34: item segments
- 35: item segment
- 40: XML element
- 41: RSS element
- 45: channel title element
- 46: channel link element
- 47: channel description element
- 48: channel language element
- 50: item header
- 51: item description segment
- 52: item publication date segment
- 60: item header
- 61: item description segment
- 62: item publication date segment
- 71: item title element
- 72: item link element
- 74: SIP item description element
- 75: telephone item description element
- 76: status item description element
- 77: access item description element
- 78: description
- 81: item title element
- 82: item link element
- 84: SIP item description element
- 85: telephone item description element
- 86: status item description element
- 87: access item description element
- 88: description

## Claims

1. A method of managing subscriber presence of a telecommunication network (10) that comprises the step of:
registering with the telecommunication network (10) by a subscriber (11),
producing a feed (13) of a presence of the subscriber (11) by the telecommunication network (10), and reading the feed (13) by a feed reader (16).

2. The method according to claim 1
**characterized in that**
the step of producing a feed (13) of the presence of the subscriber (11) by the telecommunication network (10) comprises the step of producing a feed (13) of the presence of the subscriber (11) by a telecommunication network subscriber repository (12).

3. The method according to claim 1 or 2
**characterized in that**
the telecommunication network (10) comprises an Internet Protocol multimedia subsystem network (10).

4. The method according to claim 3
**characterized in that**
the telecommunication network subscriber repository (12) comprises a Home Subscriber Server (12).

5. The method according to one of the preceding claims
**characterized in that**
data of the feed (13) are in a Really Simple Syndication format.

6. The method according to one of the preceding claims comprises the further step of providing a service that is based on the data of the feed (13) by an application (15).

7. The method according to claim 6
**characterized in that**
the service provided by the application (15) comprises a time-based billing of subscribers (11).

8. A system of telecommunication that comprises
a telecommunication network (10), the telecommunication network (10) produces a feed (13) of a presence of the subscriber (11), and
a feed reader (16) for polling and reading the feed (13).

9. The system according to claim 8
**characterized in that**
the telecommunication network (10) comprises a telecommunication network subscriber repository (12).

10. The system according to claim 8 or 9
**characterized in that**
the telecommunication network (10) comprises an Internet Protocol multimedia subsystem network (10).

11. The system according to claim 9 or 10
**characterized in that**
the telecommunication network subscriber repository (12) comprises a Home Subscriber Server (12).

12. The system according to one of the claims 8 to 11
**characterized in that**
data of the feed (13) are in a Really Simple Syndication format.

13. The system according to one of the claims 8 to 12
**characterized in that**
the Internet Protocol multimedia subsystem network (10) provides a service that is based on the data of the feed (13).
